# EUROPÄISCHE PATENTSCHRIFT

(11) **EP 0 865 516 B1**
(45) Veröffentlichungstag und Bekanntmachung des Hinweises auf die Patenterteilung: **07.07.1999**
(21) Anmeldenummer: 96934689.9
(22) Anmeldetag: 15.10.1996
(51) Int. Cl.: C25B 9/00, H01M 8/24, H01M 4/86, C25B 1/30

(54) **ELEKTROLYTZELLE**
ELECTROLYTE CELL
CELLULE ELECTROLYTIQUE

(30) Priorität: 05.12.1995 DE 19545332
(43) Veröffentlichungstag der Anmeldung: 23.09.1998
(73) Patentinhaber: Lohrberg, Karl, 63150 Heusenstamm (DE)
(72) Erfinder: Lohrberg, Karl, 63150 Heusenstamm (DE)
(74) Vertreter: KEIL & SCHAAFHAUSEN
(86) Internationale Anmeldenummer: EP9604477
(87) Internationale Veröffentlichungsnummer: WO9720966

(56) Entgegenhaltungen:
- EP-A- 0 168 600
- EP-A- 0 182 114
- EP-A- 0 330 849
- US-A- 4 436 608
- US-A- 4 728 409
- US-A- 5 358 609
- PATENT ABSTRACTS OF JAPAN vol. 014, no. 215 (C-0716), 8.Mai 1990 & JP 02 050990 A (TANAKA KIKINZOKU KOGYO KK), 20.Februar 1990,

## Beschreibung

Die Erfindung bezieht sich auf eine Elektrolytzelle mit einer Endanode und einer Endkathode und zwischen den diese aufweisenden äußeren Zellelementen befindlichen, mit diesen und untereinander elektrisch in Serie geschalteten bipolaren Zellelementen, wobei jedes Zellelement ein oder zwei Gasdiffusionselektrode(n) aufweist, wovon eine gleichzeitig die Decke der darunter liegenden und den Boden der darüber liegenden Elektrolytkammer bildet sowie die Endanode und die Anoden der bipolaren Zellelemente eine perforierte, elektrisch gut leitende Elektrodenstruktur, z.B. aus Nickel, aufweisen, wobei jeder Elektrolytkammer Elektrolyt und Reaktionsgas, wie Sauerstoff, z.B. in Form von Luft, aufgegeben und ein jeweiliges Gemisch aus Elektrolyt und dem sich ergebenden Produkt sowie Restreaktionsgas aus jeder Elektrolytkammer abgezogen werden.

Eine solche Elektrolytzelle ist beispielsweise für die Erzeugung von Ammoniumpolysulfid (APS), welcher man als Elektrolyt eine wässrige Ammoniumsulfid-Lösung zuführt und aus welcher man eine Ammoniumpolysulfid enthaltende Lösung abzieht, vorgeschlagen worden. Die Elektrolytzelle weist eine Anode, eine Gasdiffusionskathode und zwischen der Anode und der Kathode eine Elektrolytkammer auf. Die Kathode weist eine elektrisch leitende gasdurchlässige Kohlenstoffschicht auf, die mit freien Sauerstoff enthaltendem Gas angeströmt wird und mit dem Elektrolyten in Kontakt steht. Freien Sauerstoff enthaltendes Gas wird in die Elektrolytkammer geleitet, wobei in dieser Hyperoxyd-Anionen (OOHO⁻⁻) gebildet werden. Aus der Elektrolytkammer werden eine Ammoniumpolysulfid enthaltende Lösung und ein Restgas abgezogen. Zur Kathode gehört ein flächiges, durchlässiges Metallelement, z.B. ein Metallnetz oder Streckmetall, mit welchem eine Kohlenstoffschicht verbunden ist. Die Kohlenstoffschicht kann ein Kohlenstofftuch sein, das mit einem Gemisch aus Graphit- und PTF-Partikeln beschichtet ist.

Die Anwendung eines Kohlenstofftuches in Gasdiffusionselektroden ist in allen Anwendungsfällen aus folgenden Gründen problematisch: In die Gasdiffusionselektrode hinein muß Gas diffundieren, d.h. sie muß porös sein. Auf der anderen Seite muß verhindert werden, daß Gas durch die Gasdiffusionselektrode hindurchdringt, da die gewünschten Reaktionen nur an der Oberfläche des Elektrolyten innerhalb der Gasdiffusionselektrode stattfindet. Das bedeutet, daß auch Flüssigkeit in die Elektrode diffundieren muß. Bei Brennstoffzellen hat man dieses Problem dadurch zu lösen versucht, daß man den Elektrolyten immobilisiert hat, d.h. man hat ein Tuch oder Filz mit dem Elektrolyten getränkt. Dadurch stehen sich jeweils zwei poröse Tücher, nämlich beispielsweise der mit Elektrolyt getränkt Filz und die Gasdiffusionselektrode, im Preßkontakt gegenüber, welche sich gegenseitig befeuchten, eine Penetration der Flüssigkeit aber nicht zulassen.

Bei Elektrolytvorgängen, bei denen im Elektrolyten gelöste Stoffe umgesetzt werden sollen und bei denen die Löslichkeit der Stoffe beschränkt ist, ist eine Immobilisierung des Elektrolyten nicht möglich. Bei der elektrolytischen Erzeugung von H₂O₂ in einem alkalischen Elektrolyten wird beispielsweise der Durchsatz an Natronlauge durch die Löslichkeit von Na₂O₂ in der Natronlauge bestimmt. Macht man das Kohlenstofftuch auf der der Flüssigkeit zugewandten Seite hydrophil, auf der dem Gas zugewandten Seite hydrophob, indem man es auf der dem Gas zugewandten Seite mit PTFE imprägniert, so kann der Elektrolyt bis zu der hydrophoben Schicht in die Gasdiffusionselektrode eindringen. Das Gas kann in den hydrophoben Teil bis zu dem hydrophilen Teil vordringen, der mit Elektrolyt gefüllt ist. An der Grenzschicht findet in den Poren des insgesamt porösen Tuches die Reaktion statt. Die auf unterschiedlichen Kapillarkräften beruhende Trennkraft der beiden unterschiedlichen Schichten ist jedoch nicht unbegrenzt. Im allgemeinen liegt sie bei 0,025 bar. Dies bedeutet aber auch, daß bei einer Dichte des Elektrolyten von 1 g/cm³ die Höhe einer Elektrode auf 25 cm begrenzt ist. Das bedeutet weiterhin, daß der Druckunterschied in den Reaktionsräumen ebenfalls nicht höher sein darf, als 0,025 bar. Wäre er größer, würde das Gas durch den oberen Teil des senkrecht stehenden Tuches hindurchperlen. Wäre er kleiner oder wäre der Elektrolytdruck höher, würde Elektrolyt durch den unteren Teil hindurchtreten. In beiden Fälle wäre die Gasdiffusionselektrode in diesen Bereichen inaktiv. Kapillarkräfte sind außerdem von der Adhäsion der Flüssigkeit abhängig. Der Elektrolyt würde also bei jeder Temperatur eine andere Höhe verlangen. Auf diese Weise ist die großtechnische Anwendung dieser Technologie, insbesondere bei der Gewinnung von Metallen, beeinträchtigt. Bei der Metallgewinnung sind nämlich die Elektroden in der Regel höher als ein Meter. Ein Fluten der Gasdiffusionselektrode könnte man beispielsweise nur dadurch vermeiden, daß man die Metallgewinnungselektrolyse unter Vakuum so betreibt, daß man den durch die Gasdiffusionselektrode penetrierenden Elektrolyten unten aus der Elektrolysezelle absaugt, wozu ein zusätzlicher Aufwand erforderlich ist.

Eine andere Möglichkeit, dieses Problem zu lösen besteht darin, die Elektroden waagrecht zu legen. Das läßt sich jedoch bei Elektrolysen zur Gewinnung von Metallen nicht realisieren, da es sich in diesem Fall um offene Elektrolyseure handelt, aus denen in regelmäßigen Abständen Metall in Form fester Kathodenniederschläge entfernt werden muß.

Im übrigen würde ein solches Vorgehen auch aus wirtschaftlichen Gründen scheitern. Waagrechte Zellen sind monopolare Zellen. Daher müßte eine Vielzahl von Zellen elektrisch in Reihe geschaltet werden, wie z.B. bei der sogenannten Quecksilberzelle zur Erzeugung von Chor und Natronlauge. Das scheitert im vorliegenden Fall an der viel zu geringen Stromdichte bei den Gasdiffusionselektroden. Aufgrund ihrer Porosität ist der Stoffaustausch begrenzt. Als Grenze der Stromdichte gelten allgemein 2 kA/m². Bei Quecksilberelektrolysen zur Chlorerzeugung kann man demgegenüber mit Stromdichten bis zu 15 kA/m² arbeiten. Die benötigte Fläche würde also bei äquivalenter Produktion um ein Vielfaches größer. Aus diesem Grund sind monopolare Zellen für großtechnische Verfahren im allgemeinen mit vertikalen Elektroden ausgerüstet.

Aufgabe der vorliegenden Erfindung ist es, bei einer Elektrolytzelle der eingangs genannten Art die geschilderten Nachteile zu beseitigen und einen zuverlässigen und dauerhaften Einsatz bei hohem Wirkungsgrad zu gewährleisten.

Diese Aufgabe wird erfindungsgemäß z.B. dadurch gelöst, daß die Zellelemente in Form eines Stapels zusammengefaßt sind, daß die Endkathode und die Kathoden der bipolaren Zellelemente eine perforierte, elektrisch gut leitende Trägerwand, z.B. aus Nickel, aufweisen, auf denen jeweils eine Gasdiffusionselektrode liegt, und daß die an den Zellelementen vorgesehenen Überläufe in ihrer Höhe einstellbar sind.

Auf diese Weise kann sichergestellt werden, daß an keiner Stelle der Elektrolytzelle ein hydrostatischer Druck auftritt, welcher höher ist als der Penetrationswiderstand der beispielsweise als Kohlenstofftuch ausgebildeten Gasdiffusionselektrode. Der Abstand des hydrostatischen Druckes vom Penetrationswiderstand der Gasdiffusionselektrolyse kann so groß gewählt werden, daß z.B. das Reaktionsgas nacheinander die Zellelemente mit abnehmendem Druck durchströmt. Eine solche Schaltung trägt zur stärkeren Ausnutzung des Gases bei. Die Stapel von bipolaren Zellen haben einen minimalen Platzbedarf; die Anzahl der übereinanderliegenden Zellelemente ist praktisch unbegrenzt. Die erforderlichen Rohrleitungen werden kurz. Aufgrund der bipolaren Anordnung brauchen Stromschienen zwischen den Zellelementen nicht eingesetzt zu werden, obwohl die Zellelemente elektrisch in Reihe geschaltet sind. Aufgrund dieser Schaltung wird die benötigte elektrische Energie mit geringer Stromstärke und hoher Spannung benötigt, was die verwendeten Transformatoren und Gleichrichter billig macht.

Die erfundene Elektrolytzelle ist aufgrund der Gasdiffusionselektrode primär zur chemischen Umsetzung von Sauerstoff an der Oberfläche des wässrigen Elektrolyten gedacht, an die von außen eine Spannung angelegt wird. Die Selektivität und die Stärke der Oxydationskraft an der Gasdiffusionselektrode kann durch Auswahl von geeigneten Elektrolyten, aber auch durch unterschiedliche Katalysatoren, beispielsweise durch Platin, eingestellt werden.

Als solche kann die Elektrolytzelle beispielsweise auch als Brennstoffzelle zur Erzeugung von Energie dienen, wenn man beiden Polaritäten von außen miteinander reagierende Gase zuführt. Im Gegensatz zur herkömmlichen Brennstoffzelle liegt dann die Wertschöpfung im erzeugten Reaktionsprodukt. Wenn man an der Anode erzeugten Sauerstoff mit von außen zugeführtem Wasserstoff umsetzt, dient die so aufgebaute Elektrolytzelle der Spannungserniedrigung und damit der Einsparung von teurer elektrischer Energie.

Dies ist besonders dann interessant, wenn man durch Gasdiffusionselektroden Anoden mit hoher Sauerstoffüberspannung ersetzten kann. Das trifft z.B. auf die elektrolytische Erzeugung von Metallen zu, wobei vor allem Zn und Cu zu erwähnen sind. Vorzugsweise wird die erfundene Elektrolytzelle für die elektrolytische Erzeugung von H₂O₂ durch Oxydation des an der Kathode in alkalischer Lösung entstehenden H₂ mit O₂ eingesetzt, wobei realtiv komplizierte Vorgänge ablaufen. Bei einer katalysatorfreien Gasdiffusionselektrode beträgt die Energieersparnis etwa 0,6 V, der Bildungswärme von Na₂O₂, das sich in alkalischer Lösung bildet, entsprechend ca. 450 kWh/t H₂O₂.

Eine weitere technische Anwendung besteht in dem sogn. Hydrina-Verfahren, bei welchem Na₂SO₄, das in großen Mengen als Neutralisationsprodukt von H₂SO₄ und NaOH anfällt, in der Elektrolyse wieder in seine Ausgangsprodukte gespalten wird. Bei der Anwendung einer mit Platin katalysierten Gasdiffusionselektrode als Anode oder als Kathode und dem Leiten von H₂ bzw. O₂ jeweils über die Elektrode gegensätzlicher Polarität ergibt sich folgende Reaktionsgleichung:

Na₂SO₄ + 3 H₂O = H₂SO₄ + 2 NaOH + H₂O - 69,3 kcal,

d.h. der Energiebedarf beschränkte sich auf die Neutralisationswärme von Säure und Lauge.

Grundsätzlich läßt sich mit der erfindunqsgemäßen Elektrolytzelle das Prinzip der Redox-Vorgänge auf jedwede Reduktion/Oxydation anwenden, wobei die gewünschten Potentiale durch unterschiedliche Katalysatoren in der Gasdiffusionselektrode eingestellt werden, wodurch die jeweils gewünschte Reaktion bevorzugt abläuft.

Besonders zweckmäßige Ausgestaltungen der erfindungsgemäßen Elektrolytzelle sind in den Unteransprüchen angegeben.

Immer dann, wenn das oxydierte Produkt an der Kathode wieder reduziert werden kann, ist zu empfehlen, die Anoden von den gegenüberliegenden Kathoden durch ein Diaphragma zu trennen.

Dabei kann das Diaphragma ein Tuch oder ein auf die Anode aufgesaugtes Fasergemisch, es kann aber auch eine Ionentauschermembrane sein.

Für bestimmte Anwendungsfälle kann die Gasdiffusionselektrode katalysatorfrei sein, beispielsweise bei der Herstellung von H₂O₂.

Für den Betrieb als Brennstoffzelle sind vorteilhafterweise die Anoden und die Kathoden mit einer Gasdiffusionselektrode belegt, die katalysatorimprägniert ist, und die Zellelemente sind jeweils durch eine gasdichte horizontale Trennwand unterteilt.

Die jeweilige Kathode der bipolaren Zellelemente, insbesondere deren Trägerwand, und die jeweilige Anode, insbesondere deren Elektrodenstruktur, können über elektrisch leitende, mit Durchtrittsöffnungen für Gas bzw. Gas und Flüssigkeit versehene Stege, z.B. aus Nickel, untereinander verbunden sein. Bei Unterteilung der Zellelemente durch eine Trennwand ist dabei auf jeder Seite der Trennwand in den Stegen eine entsprechende Durchtrittsöffnung vorgesehen.

Zur Gewährleistung eines wirtschaftlichen Aufbaus der Elektrolytzelle können die Gehäuse der Zellelemente mittels Randflanschen unter Zwischenlage von elektrisch isolierenden Dichtungen miteinander Gas- und Flüssigkeitsdicht verbunden sein.

Eine bevorzugte Betriebsweise ergibt sich dann, wenn die Zellelemente in Bezug auf den Elektrolyten parallel geschaltet sind. Diese Betriebsweise ist besonders dann von Vorteil, wenn geringe Strommengen in großen Mengen von Elektrolyt gegeben werden müssen. Das ist zum Beispiel bei der Sterilisation von Wasser der Fall.

Bei den elektrisch und in Bezug auf den Elektrolyten in Serie geschalteten Zellelementen sind vorzugsweise ein jeweiliges Gemisch aus Elektrolyt und dem sich ergebenen Produkt sowie Reaktionsgas aus der Elektrolytkammer eines oberen Zellelements über Verbindungsleitungen in die Elektrolytkammer eines unteren Zellelements überführbar und aus dem untersten Zellelement Elektrolyt und Produkt und ggf. Restreaktionsgas abziehbar.

Die den Überläufen zugeordneten Verbindungsleitungen münden zweckmäßigerweise seitlich in das jeweilige untere Zellelement, so daß eine einfache Montage möglich ist.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschrieben und/oder bildlich dargestellten Merkmale für sich oder in beliebiger Kombination den Gegenstand der Erfindung auch unabhängig von ihrer Zusammenfassung in den Ansprüchen oder deren Rückbeziehung.

Es zeigen:
- Fig. 1: schematisch den Aufbau einer erfindungsgemäßen Elektrolytzelle am Beispiel der Erzeugung von H₂O₂,
- Fig. 2: schematisch den Ausschnitt eines bipolaren Zellelements für einen Zellelementstapel für einen Elektrolysebetrieb, und zwar Figur 2a eine solche ohne Redox-Vorgänge, und Figur 2b eine mit Redox-Vorgängen, wobei eine Trennschicht auf der Anode vorgesehen ist,
- Fig. 3: eine schematische Darstellung ähnlich derjenigen von Fig. 1, jedoch geändert für den Betrieb der Elektrolytzelle als Brennstoffzelle, und
- Fig. 4: eine Darstellung ähnlich denjenigen von Fig. 2, wobei das Zellelement jedoch für den Betrieb der Elektrolytzelle als Brennstoffzelle ausgebildet ist.

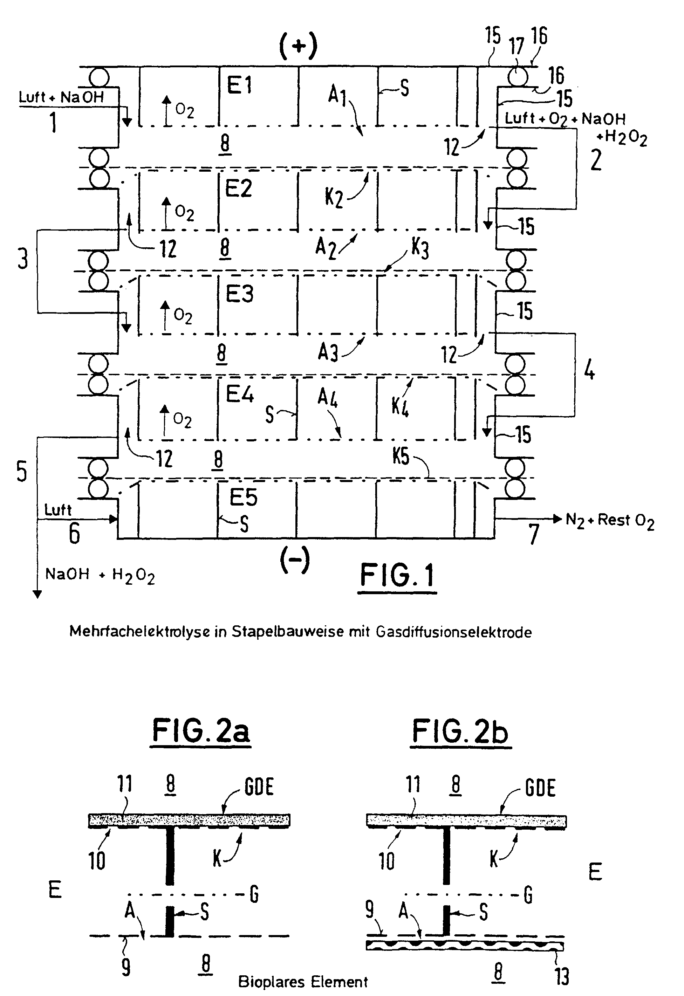

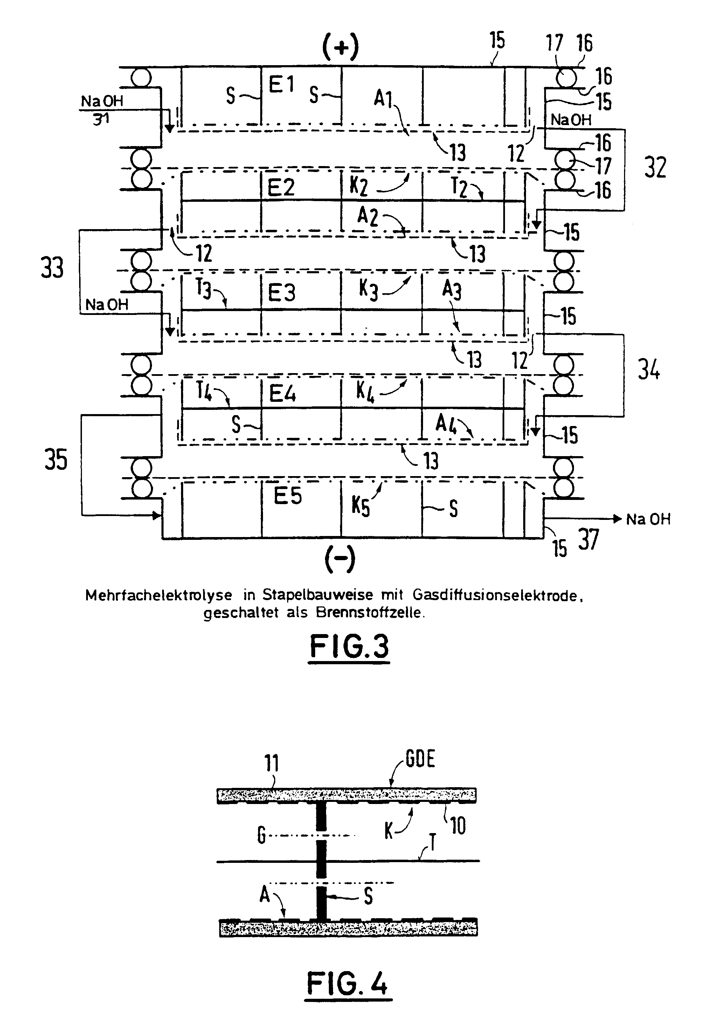

Fig. 1 stellt eine Elektrolytzelle als einen Stapel von übereinander gestapelten bipolaren Zellelementen E1 bis E5 dar. Die unterschiedlichen Polaritäten sind mit (+) für die Anoden A1 bis A5 und mit (-) für die Kathoden K1 bis K5 bezeichnet. Die beiden Endelektroden A1 (Endandode) und K5 (Endkathode) haben naturgemäß nur eine Polarität. Im obersten Zellelement E1 werden Luft und Natronlauge (NaOH) über eine Zufuhrleitung 1 zugeführt. In dem Zellelement E1 wird aufgrund der einfachen Polarität nur Sauerstoff gebildet. Die Anode A1 besteht dabei aus einem Streckmetall, Gewebe oder Lochblech aus Nickel oder jedem anderen Metall oder Material, das eine gute elektrische Leitfähigkeit hat und unter den gegebenen Bedingungen korrosionsfest ist. Die Anode A1 kann von der gegenüberliegenden Kathode K2 durch ein Diaphragma oder eine Membran 13 (vergleiche Fig. 2b und 3) getrennt sein. Das ist immer dann zu empfehlen, wenn das oxydierte Produkt an der Kathode K1 bis K5 wieder reduziert werden kann. Das Diaphragma 13 kann ein Tuch sein oder ein auf die Anode A1 bis A5 aufgesaugtes und eingebranntes Fasergemisch oder eine poröse, im wesentlichen nur den Strom durchlassende dünne Platte aus Kunststoff; die Membran muß Ionentauscheigenschaften haben.

Wenn, wie erwähnt, über die Zufuhrleitung 1 Luft oder Luft und Sauerstoff in das Zellelement 1 eingegeben werden, vermischt sich diese mit dem dort gebildeten Sauerstoff und das entstehende Gasgemisch wird über die Verbindungsleitung 2 an das Zellelement E2 abgegeben. In dem Zellelement E2 befinden sich zwei Polaritäten, nämlich die Kathode K2 und die Anode A2. Die Kathode K2 dient erfindungsgemäß gleichzeitig als Boden des ersten Zellelements E1. Die Kathode K2 besteht, wie die Anoden A1 und A2, z.B. aus einer Nickelkonstruktion, auf der das in diesem Beispiel nicht katalysatorimprägnierte Kohlenstofftuch zur Bildung einer Gasdiffusionselektrode 11 aufliegt. An der Kathode K2 wird der sich dort normalerweise bildende H₂ durch den dort anwesenden O₂ in der Gasdiffusionselektrode 11 zu H₂O₂ umgesetzt, welches sich als Na₂O₂ in dem als Elektrolyten verwendeten NaOH löst und mit dieser zusammen durch die Verbindungsleitung 2 in das Zellelement E2 übertritt.

Analog tritt durch die Verbindungsleitungen 3 und 4 die sich auf den Wegen nach unten mit Na₂O₂ anreichernde NaOH zusammen mit der langsam an O₂ verarmenden Luft in die Zellelemente E3 und E4 ein, welches über die Abgabeleitung 5 verlassen wird.

In dem Zellelement E5 wird zum letzten Mal Na₂O₂ gebildet, so daß der Elektrolyt, bestehend aus Na₂O₂ haltiger NaOH hier abgetrennt werden kann. Er kann aber auch zusammen mit dem Gemisch aus O₂ und N₂ durch eine Rückführungsleitung 6 in das Zellelement E5 gegeben werden. O₂ dient in dem Zellelement E5 dazu, um sicherzustellen, daß in dem Zellelement E5 noch Na₂O₂ gebildet werden kann.

N₂ und restlicher O₂ treten durch die Abgabeleitung 7 aus dem System aus.

Die Höhe des letztlich von dem Kohlenstofftuch getragenen Elektrolyten kann durch die Anordnung der Überläufe 12 der Verbindungsleitungen 2 bis 4, bzw. der Abgabeleitung 5, beliebig eingestellt werden. Ebenso ist durch die seitliche Zuführung des Elektrolyten der Abstand der beiden Elektroden A1 bis A5 und K1 bis K5 unbeeinflußt. Damit kann, um den Spannungsabfall und damit den Energieverbrauch möglichst gering zu halten, der mechanisch und strömungstechnisch kleinstmögliche Abstand der beiden Elektroden voneinander eingestellt werden. Auf diese Weise wird sichergestellt, daß an keiner Stelle des Systemes ein hydrostatischer Druck auftreten kann, der höher ist als der Penetrationswiderstand der Kohlenstofftücher.

Der Stapel an bipolaren Zellelementen E1 bis E5 hat einen minimalen Platzbedarf, da die Anzahl der übereinanderliegenden Zellelemente E1 bis E5 praktisch unbegrenzt ist. Die Rohrleitungen werden kurz. Aufgrund der bipolaren Anordnung sind Stromschienen zwischen den Zellelementen E1 bis E5 nicht erforderlich, obwohl die Zellelementen E1 bis E5 elektrisch in Reihe geschaltet sind. Aufgrund dieser Schaltung wird die benötigte elektrische Energie mit geringem Strom und hoher Spannung benötigt, was Transformatoren und Gleichrichter billig macht.

In Fig. 3 ist der Betrieb der Elektrolytzelle als Brennstoffzelle veranschaulicht. In diesem Fall wird das Diaphragma 13 oder die Membran der Anoden durch ein mit Pt imprägniertes Kohlenstofftuch 14 (Fig. 4) ersetzt; das Kohlenstofftuch an der Kathode K2 bis K5 wird ebenfalls mit Pt imprägniert.

Der Elektrolyt, im vorliegenden Fall NaOH, wird dem System über die Zufuhrleitung 31 zugeführt und durch läuft den Stapel an Zellelementen E1 bis E5 über die Verbindungsleitungen 32 bis 35 und die Abgabeleitung 37. Die Überläufe 12 des Elektrolyten werden so eingestellt, daß die Anoden A1 bis A5 mit der als Kohlenstofftuch ausgebildeten Gasdiffusionselektrode 14 nur eintaucht, daß Kohlenstofftuch jedoch nicht penetriert wird.

Den Anoden A1 bis A5 wird H₂ von außen durch (nicht dargestellte) Rohrleitungen zugeleitet. In der Elektrolytzelle entsteht kein Sauerstoff mehr, sondern Wasser. Den Kathoden wird O₂ als Luft oder als solcher dem System ebenfalls von außen zugeführt. Um eine interne Vermischung der beiden Gase O₂ und H₂ zu vermeiden, sind die bipolaren zellelemente E2 und E4 druch Trennwände T2 bis T4 gasdicht in zwei getrennte Räume geteilt.

Fig. 2 veranschaulicht den Auschnitt eines bipolaren Zellelements E für einen Elektrodenstapel gemäß Fig. 1 bei Betrieb als Elektrolyse ohne Redox-Vorgänge, d.h. ohne Trennschicht auf den Anode A als vergrößerten Ausschnitt. Die Elektrodenstruktur 9 der Anode A und die Trägerwand 10 der Kathode K sind über leitende Stege S miteinander verbunden, die z.B. im Falle der Erzeugung von H₂O₂ aus Nickel bestehen. Auf der Kathode K liegt eine Gasdiffusionselektrode 11 aus Kohlenstofftuch auf und ist somit auch leitend mit dieser verbunden. Jeder Steg S ist mit mindestens einer Gasdurchtrittsöffnung G versehen.

Fig. 4 zeigt in einem Fig. 2 entsprechenden Ausschnitt ein bipolares Zellelement E für einen Elektrodenstapel bei Betrieb als Brennstoffzelle. Beide Elektroden sind mit einer Gasdiffusionselektrode 14 bzw. 11 belegt. Die Verbindungsstege S sind wegen der Trennwand T auf jeder Seite mit einer Durchtrittsöffnung G für Gas versehen.

Die bipolaren Zellelemente zeigen insbesondere in dieser Schaltung als Brennstoffzelle zur Erzeugung von elektrischer Energie gegenüber dem Stand der Technik wesentliche Vorteile. Bei den bekannten Zellen ist der Elektrolyt immobilisiert. Das sich bildende Wasser würde ohne entsprechende Gegenmaßnahmen den Elektrolyten verdünnen, den Elektrolytraum fluten und die Zelle außer Funktion setzen. Aus diesem Grund werden die Zellen bei einer Temperatur betrieben, bei welcher Wasser aus dem Elektrolyten verdampft. Wässrige Elektrolyte enthalten aber zumeist gut lösliche, hygroskopische Stoffe wie Alkalilaugen oder Phosphorsäuren zur Leitung des Stromes. Diese zeigen beim Ausdampfen von Wasser eine entsprechende Siedepunktserhöhung, die den Partialdruck des Wassers über dem Elektrolyten unter den des reinen Wassers absenkt. Die Arbeitstemperatur müßte erhöht werden, was bei den aggressiven Eigenschaften der Elektrolyte Materrialprobleme mit sich bringt.

Um das zu vermeiden, senkt man den Partialdruck des Wassers in der Brennstoffzelle ab. Das geschieht dadurch, daß man die Reaktionsgase O₂ und H₂ nicht zu 100% ausnutzt. Die Verdampfung wird in eine Verdunstung umgewandelt. Die Verdunstungswärme ist Teil der in der Brennstoffzelle erzeugten elektrischen Energie, die durch den inneren Widerstand der Zelle in Wärme umgewandelt wird. Ein wesentlicher Teil des inneren Widerstandes wird durch den Widerstand des Elektrolyten verursacht, der wiederum maßgeblich durch das Material zur Immobilisierung desselben erhöht wird.

Wesentlich günstiger können die Verhältnisse mit der erfindungsgemäßen Elektrolytzelle gestaltet werden. Die Menge der umgepumpten Elektrolyten kann so eingestellt werden, daß sowohl das erzeugte Wasser als auch die erzeugte Wärme aufgenommen werden können. Die Ausnutzung insbesondere des Wasserstoffs kann gesteigert werden. Die intern erzeugte, als Verlust zu betrachtende Wärmemenge und die Menge des erzeugten Wassers werden entkoppelt. Das erhöht die Flexibilität des Betriebes der Zelle, da die erzeugte Wassermenge linear mit der Leistung steigt, die intern erzeugte Wärmemenge aber quadratisch. Die Arbeitstemperatur der Elektrolytzelle kann nach deren Erfordernissen optimiert werden. Die notwendige Wasserverdampfung kann nach außen in einen dafür ausgelegten Verdampfer verlegt und ggf. mehrstufig durchgeführt werden. Der Wirkungsgrad der Brennstoffzelle wird insgesamt gesteigert.

### Bezugszeichenliste:

- 1: Zufuhrleitung
- 2: Verbindungsleitung
- 3: Verbindungsleitung
- 4: Verbindungsleitung
- 5: Abgabeleitung
- 6: Rückführungsleitung
- 7: Abgabeleitung
- 8: Elektrolytkammern
- 9: Elektrodenstruktur
- 10: Trägerwand
- 11: Gasdiffusionselektrode
- 12: Überläufe
- 13: Diaphragma
- 14: Gasdiffusionselektrode
- 15: Gehäuse
- 16: Randflansche
- 17: Dichtung
- 31: Zufuhrleitung
- 32: Verbindungsleitung
- 33: Verbindungsleitung
- 34: Verbindungsleitung
- 35: Verbindungsleitung
- 37: Abgabeleitung
- A1 bis A5: Anoden
- E1 bis E5: Zellelemente
- G: Gasdurchtrittsöffnung
- K1 bis K5: Kathoden
- S: Stege
- T2 bis T4: Trennwände

## Patentansprüche

1. Elektrolytzelle mit einer Endanode (A1) und einer Endkathode (K5) und zwischen den diese aufweisenden äußeren Zellelementen (E1, E5) befindlichen, mit diesen und untereinander elektrisch in Serie geschalteten bipolaren Zellelementen (E2 bis E4), wobei jedes Zellelement (E1 bis E5) eine oder zwei Gasdiffusionselektrode(n) (11) aufweist, wovon eine gleichzeitig die Decke der darunter liegenden und den Boden der darüber liegenden Elektrolytkammer (8) bildet sowie die Endanode (A1) und die Anoden (A2 bis A4) der bipolaren Zellelemente (E2 bis E4) eine perforierte, elektrisch gut leitende Elektrodenstrukur (9), z. B. aus Nickel, aufweisen, wobei jeder Elektrolytkammer (8) Elektrolyt und Reaktionsgas, wie Sauerstoff, z. B. in Form von Luft, aufgegeben und ein jeweiliges Gemisch aus Elektrolyt und dem sich ergebenden Produkt sowie Restreaktionsgas aus jeder Elektrolytkammer (8) abgezogen werden, **dadurch gekennzeichnet**, daß die Zellelemente (E1 bis E5) in Form eines Stapels zusammengefaßt sind, daß die Endkathode (K5) und die Kathoden (K2 bis K4) der bipolaren Zellelemente (E2 bis E5) eine perforierte, elektrisch gut leitende Trägerwand (10), z. B. aus Nickel, aufweisen, auf denen jeweils eine Gasdiffusionselektrode (11) aufliegt, und daß die an den jeweils oberen Zellelementen (E1 bis E4) vorgesehenen Überläufe (12) in ihrer Höhe einstellbar sind.

2. Elektrolytzelle nach Anspruch 1, **dadurch gekennzeichnet**, daß die Anoden (A1 bis A4) von den gegenüberliegenden Kathoden (K2 bis K5) mittels eines Diaphragmas (13) getrennt sind, das eine gasdichte Ionenaustauschermembran aufweist.

3. Elektrolytzelle nach Anspruch 2, **dadurch gekennzeichnet**, daß das Diaphragma (13) ein Tuch oder ein auf die Anode (A1 bis A4) aufgesaugtes Fasergemisch oder eine poröse, im wesentlich nur den Strom durchlassende dünne Platte aus Kunststoff ist.

4. Elektrolytzelle nach einem der vorhergehenden Ansprüche, **dadurch gekennzeichnet**, daß die Gasdiffusionselektrode (11) katalysatorfrei ist.

5. Elektrolytzelle nach einem der Ansprüche 1 bis 3, **dadurch gekennzeichnet**, daß die Anoden (A1 bis A4) und die Kathoden (K2 bis K5) mit einer Gasdiffusionselektrode (11) belegt sind, die katalysatorimprägniert ist, und daß die Zellelemente (E1 bis E5) jeweils mittels einer gasdichten horizontalen Trennwand (T2 bis T4) unterteilt sind.

6. Elektrolytzelle nach Anspruch 5, **dadurch gekennzeichnet**, daß die jeweilige Kathode (K2 bis K4) der bipolaren Zellelemente (E2 bis E4), insbesondere deren Trägerwand (10), und die jeweilige Anode (A2 bis A4), insbesondere deren Elektrodenstruktur (9), über elektrisch leitende, mit Durchtrittsöffnungen (G) für Gas bzw. Gas und Flüssigkeit versehene Stege (S), z. B. aus Nickel, untereinander verbunden sind.

7. Elektrolytzelle nach Anspruch 6, **dadurch gekennzeichnet**, daß bei Unterteilung der Zellelemente (E2 bis E4) mittels einer Trennwand (T2 bis T4) auf jeder Seite der Trennwand (T2 bis T4) in den Stegen (S) eine Durchtrittsöffnung (G) vorgesehen ist.

8. Elektrolytzelle nach einem der vorhergehenden Ansprüche, **dadurch gekennzeichnet**, daß die Gehäuse (15) der Zellelemente (E1 bis E5) mittels Randflanschen (16) unter Zwischenlage von Dichtungsringen (17) miteinander gas- und flüssigkeitsdicht verbunden, aber elektrisch getrennt sind.

9. Elektrolytzelle nach einem der vorhergehenden Ansprüche, **dadurch gekennzeichnet**, daß die Zellelemente (E1 bis E5) in Bezug auf den Elektrolyten parallel geschaltet sind.

10. Elektrolytzelle nach einem der vorhergehenden Ansprüche, **dadurch gekennzeichnet**, daß bei den elektrisch in Serie geschalteten Zellelementen (E1 bis E5) ein jeweiliges Gemisch aus Elektrolyt und dem sich ergebenden Produkt sowie Reaktionsgas aus der Elektrolytkammer (8) eines oberen Zellelements (E1 bis E4) über Verbindungsleitungen (2 bis 5) in die Elektrolytkammer (8) eines unteren Zellelements (E2 bis E5) überführbar und aus dem untersten Zellelement (E5) Elektrolyt und Produkt und ggf. Reaktionsgas abziehbar sind.

11. Elektrolytzelle nach einem der vorhergehenden Ansprüche, **dadurch gekennzeichnet**, daß die den Überläufen (12) zugeordneten Verbindungsleitungen (2 bis 5,6) seitlich in das jeweilige untere Zellelement (E2 bis E5) münden.

## Claims

1. Electrolyte cell with a terminal anode (A1) and a terminal cathode (K5) and between the outer cell elements (E1, E5) comprising same, bipolar cell elements (E2 to E4) being connected in series with them and amongst each other, each cell element (E1 to E5) comprising one or two gas diffusion electrode(s) (11), one of them being the top of the electrolyte chamber (8) underneath and the bottom of the electrolyte chamber (8) above as well as the terminal anode (A1) and the anodes (A2 to A4) of the bipolar cell elements (E2 to E4) comprising a perforated, electrically well-conducting electrode structure (9), e.g. of nickel, electrolyte and reaction gas such as oxygen, e.g. in the form of air being fed to each electrolyte chamber (8), and a respective mixture of electrolyte and the resulting product and restreaction gas being withdrawn from each electrolyte chamber (8), **characterized in that** the cell elements (E1 to E5) are assembled in a stack, **that** the terminal cathode (K5) and the cathodes (K2 to K4) of the bipolar cell elements (E2 to E5) comprise a perforated, electrically well-conducting support wall (10), e.g. of nickel, upon each of which rests a gas diffusion electrode, **and that** the heights of the overflows (12) provided at the respective upper cell elements (E1 to E4) are adjustable.

2. Electrolyte cell according to claim 1, **characterized in that** the anodes (A1 to A4) are separated from the opposite cathodes (K2 to K5) by means of a diaphragm (13) comprising a gasproof ion exchange membrane.

3. Electrolyte cell according to claim 2, **characterized in that** diaphragm (13) is a fabric or a fibre mix absorbed on the anode (A1 to A4) or a porous thin plastic plate essentially only letting the current through.

4. Electrolyte cell according to one of the preceding claims, **characterized in that** the gas diffusion electrode (11) is catalyst-free.

5. Electrolyte cell according to one of claims 1 to 3, **characterized in that** the anodes (A1 to A4) and the cathodes (K2 to K5) comprise a gas diffusion electrode (11) being catalyst-impregnated and that the cell elements (E1 to E5) are separated by means of a gasproof horizontal separation wall (T2 to T4).

6. Electrolyte cell according to claim 5, **characterized in that** the respective cathode (K2 to K4) of the bipolar cell elements (E2 to E4), in particular their support wall (10), and the respective anode (A2 to A4), in particular its electrode structure (9), are being inter-connected via electrically conductive bridges, e.g. of nickel, comprising through openings (G) for gas and gas and liquid, respectively.

7. Electrolyte cell accoding to claim 6, **characterized in that** in case of separation of the cell elements (E2 to E4) by means of a separation wall (T2 to T4) on each side of the separation wall (T2 to T4) in the bridges (S) a through opening (G) is provided.

8. Electrolyte cell according to one of the preceding claims, **characterized in that** the housings (15) of the cell elements (E1 to E5) are connected with each other in a gasproof and liquid-proof manner, but electrically separated by means of margin flanges (16) intersecting packing rings.

9. Electrolyte cell according to one of the preceding claims, **characterized in that** the cell elements (E1 to E5) are connected in parallell with reference to the electrolyte.

10. Electrolyte cell according to one of the preceding claims, **characterized in that** with the cell elements (E1 to E5) electrically connected in series, a respective mixture of electrolyte and the product resulting therefrom as well as reaction gas from the electrolyte chamber (8) of an upper cell element (E1 to E4) via connecting conduits (2 to 5) in the electrolyte chamber (8) of a lower cell element (E2 to E5) is transferable and from the lowest cell element (E5) electrolyte and product and, if applicable, reaction gas are deductible.

11. Electrolyte cell according to one of the preceding claims, **characterized in that** the connecting leads (2 to 5,6) assigned to the overflows (12) lead sideways into the respective lower cell element (E2 to E5).

## Revendications

1. Cellule électrolytique ayant une anode terminale (A1) et une cathode terminale (K5) ainsi que des éléments cellulaires bipolaires (E2 à E4) situés entre les éléments cellulaires externes (E1, E5) portant respectivement l'anode terminale (A1) et la cathode terminale (K5), les éléments cellulaires bipolaires (E2 à E4) étant branchés électriquement en série entre eux ainsi qu'avec les éléments cellulaires externes (E1, E5), chaque élément cellulaire (E1 à E5) étant muni d'une ou de deux électrode(s) à diffusion gazeuse (11), dont l'une forme simultanément le couvercle de la chambre électrolytique (8) située en dessous et le fond de celle située au-dessus, l'anode terminale (A1) et les anodes (A2 à A4) des éléments cellulaires bipolaires (E2 à E4) présentant une structure d'électrode (9) perforée conduisant bien le courant, par exemple en nickel, chaque chambre électrolytique (8) étant alimentée en électrolyte et en gaz de réaction, tel que de l'oxygène, par exemple sous forme d'air, et un mélange constitué de l'électrolyte et du produit formé ainsi que du gaz de réaction résiduel étant extrait de chaque chambre électrolytique (8), **caractérisé en ce que** les éléments cellulaires (E1 à E5) sont empilés les uns sur les autres, en ce que la cathode terminale (K5) et les cathodes (K2 à K4) des éléments cellulaires bipolaires (E2 à E5) sont munies d'une paroi support (10) perforée conduisant bien le courant, par exemple en Nickel, sur chacune desquelles repose une électrode à diffusion gazeuse (11) et en ce que les trop-pleins prévus sur chacun des éléments cellulaires supérieurs (E1 à E4) sont réglables en hauteur.

2. Cellule électrolytique selon la revendication 1, **caractérisé en ce que** les anodes (A1 à A4) sont séparées des cathodes opposées (K2 à K5) au moyen d'un diaphragme (13) muni d'une membrane échangeuse d'ions étanche aux gaz.

3. Cellule électrolytique selon la revendication 2, **caractérisé en ce que** le diaphragme (13) est un mélange de fibres adsorbé sur l'anode (A1 à A4) ou un tissu ou une fine plaque de matière plastique poreuse ne laissant passer pratiquement que le courant.

4. Cellule électrolytique selon l'une des revendications précédentes, **caractérisé en ce que** l'électrode à diffusion gazeuse (11) est exempte de catalyseur.

5. Cellule électrolytique selon l'une des revendications 1 à 3, **caractérisé en ce que** les anodes (A1 à A4) et les cathodes (K2 à K5) sont revêtues d'une électrode à diffusion gazeuse (11) imprégnée de catalyseur et en ce que chaque élément cellulaire (E1 à E5) est subdivisé au moyen d'une cloison (T2 à T4) horizontale étanche aux gaz.

6. Cellule électrolytique selon la revendication 5, **caractérisé en ce que** chaque cathode (K2 à K4) des éléments cellulaires bipolaires (E2 à E4), en particulier sa paroi support (10), et chaque anode (A2 à A4), en particulier sa structure d'électrode (9), sont reliées entre elles par des entretoises (S) conduisant l'électricité, par exemple en nickel, et munies d'ouvertures de pénétration (G) pour le gaz ou le gaz et le liquide.

7. Cellule électrolytique selon la revendication 6, **caractérisé en ce que** il est prévu, lorsque les éléments cellulaires (E2 à E4) sont subdivisés au moyen d'une cloison (T2 à T4), une ouverture de pénétration (G) dans l'entretoise (S) de chaque côté de la cloison (T2 à T4).

8. Cellule électrolytique selon l'une des revendications précédentes, **caractérisé en ce que** les boîtiers (15) des éléments cellulaires (E1 à E5) sont reliés entre eux de façon étanche aux gaz et aux liquides au moyen de rebords (16) entre lesquels des joints annulaires (17) sont intercalés, tout en n'étant pas reliés électriquement.

9. Cellule électrolytique selon l'une des revendications précédentes, **caractérisé en ce que** les éléments cellulaires (E1 à E5) sont branchés en parallèle en ce qui concerne l'électrolyte.

10. Cellule électrolytique selon l'une des revendications précédentes, **caractérisé en ce que**, lorsque les éléments cellulaires (E1 à E5) sont branchés électriquement en série, un mélange constitué de l'électrolyte et du produit formé ainsi que du gaz de réaction peut être transféré au travers de conduites de transfert (2 à 5) de la chambre électrolytique (8) d'un élément cellulaire supérieur (E1 à E4) vers la chambre électrolytique (8) d'un élément cellulaire inférieur (E2 à E5) et l'électrolyte et le produit ainsi que le cas échéant le gaz de réaction peuvent être évacués de l'élément cellulaire le plus bas (E5).

11. Cellule électrolytique selon l'une des revendications précédentes, **caractérisé en ce que** les conduites de transfert (2 à 5, 6) associées aux trop-pleins (12) débouchent latéralement dans l'élément cellulaire (E2 à E5) situé directement en dessous.
